# EUROPEAN PATENT APPLICATION

(11) **EP 4 845 229 A1**
(43) Date of publication of application: **25.11.2026**
(21) Application number: 25755205.9
(22) Date of filing: 14.02.2025
(51) Int. Cl.: H04W 48/02, H04W 8/18, H04J 11/00, H04W 24/02, H04W 84/10, H04W 84/04, H04W 88/14

(54) **METHOD AND APPARATUS FOR CONTROLLING SETTING AND ACCESS OF USER-INSTALLED BASE STATION**

(30) Priority: 15.02.2024 KR 20240021825
(71) Applicant: Samsung Electronics Co., Ltd., Suwon-si, Gyeonggi-do 16677 (KR)
(72) Inventor: SUH, Dongeun, Suwon-si Gyeonggi-do 16677 (KR); PARK, Jungshin, Suwon-si Gyeonggi-do 16677 (KR); BAEK, Youngkyo, Suwon-si Gyeonggi-do 16677 (KR); LEE, Hoyeon, Suwon-si Gyeonggi-do 16677 (KR)
(74) Representative: Gulde & Partner
(86) International application number: PCT/KR2025/099400
(87) International publication number: WO 2025/174208

(57) **Abstract**

The present disclosure relates to a 5G or 6G communication system for supporting higher data transmission rates. A method performed by a unified data management (UDM) entity in a wireless communication system comprises receiving, from a network exposure function (NEF) entity, an update request message including provisioning information associated with closed access group (CAG) information, transmitting, to a unified data repository (UDR) entity, the provisioning information to update the provisioning information, and transmitting, to the NEF entity, a response message for the update, wherein the CAG information includes a list of CAG identity (ID) which a user equipment (UE) is allowed to access, and the provisioning information may include information on at least one CAG ID to be included in the list of the CAG IDs.

## Description

### [Technical Field]

The disclosure relates to a wireless communication system and, more specifically, to a method and an apparatus for controlling configuration of and access to a user-installed base station.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Provided according to an embodiment of the disclosure are an apparatus and a method capable of effectively providing services in a mobile communication system.

### [Solution to Problem]

According to an embodiment of the disclosure, a method performed by a unified data management (UDM) entity in a wireless communication system may include receiving, from a network exposure function (NEF) entity, an update request message including provisioning information associated with closed access group (CAG) information, transmitting the provisioning information to a unified data repository (UDR) entity for update of the provisioning information, and transmitting, to the NEF entity, a response message for the update, wherein the CAG information includes a list of CAG identities (IDs) which a user equipment (UE) is allowed to access, and the provisioning information includes information on at least one CAG ID to be included in the list of the CAG IDs.

### [Advantageous Effects of Invention]

According to an embodiment of the disclosure, an apparatus and a method capable of effectively providing services in a wireless communication system can be provided.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates an architecture of a 5G system according to various embodiments of the disclosure.
FIG. 2 illustrates a method for providing allowed group information of a UE.
FIG. 3 illustrates a method for providing group information of UEs according to an embodiment.
FIG. 4 illustrates a method for providing group information of UEs during registration of an agreed V-PLNM.
FIG. 5 illustrates a method of controlling configuration of a user-installed base station according to an embodiment.
FIG. 6 illustrates a method for controlling configuration of a user-installed base station according to an embodiment.
FIG. 7 illustrates an exemplary structure of a base station according to an embodiment of the disclosure.
FIG. 8 illustrates an exemplary structure of a UE according to an embodiment of the disclosure.
FIG. 9 illustrates a structure of a core network entity according to an embodiment of the disclosure.

### [Mode for the Invention]

Hereinafter, the operation principle of the disclosure will be described in detail in conjunction with the accompanying drawings. In describing the disclosure below, a detailed description of known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in 5GS and NR standards, which are the standards specified by the 3rd generation partnership project (3GPP) group among the existing communication standards, will be used for the sake of descriptive convenience. However, the disclosure is not limited by the above terms and names, and may be applied in the same way to systems that conform other standards. In particular, the disclosure may be applied to the 3GPP 5G system (5GS)/NR (5th generation mobile communication standards).

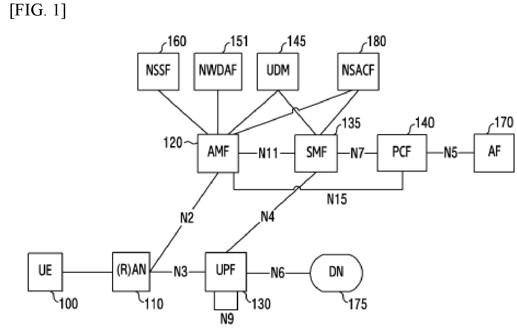

FIG. 1 illustrates an architecture of a 5G system according to various embodiments of the disclosure.

Referring to FIG. 1, a 5G mobile communication network may include a 5G user equipment (UE) (terminal) 100, a 5G radio access network (RAN) (base station, next generation node B (gNB) (5g nodeB), an evolved node B (eNB), etc.) 110, and a 5G core network. For example, the 5G core network may include network functions (NFs), such as an access and mobility management function (AMF) 120 that provides a mobility management function of the UE, a session management function (SMF) 135 that provides a session management function, a user plane function (UPF) 130 that performs a data transfer role, a policy control function (PCF) 140 that provides a policy control function, a unified data management (UDM) 145 that provides a function of managing data, such as subscriber data and policy control data, or a unified data repository (UDR) that stores data of various NFs such as the UDM. The 5G core network may further include NFs, such as a network slice selection function (NSSF) 160, a network data analytic function (NWDAF) 151, an application function (AF) 170, a data network (DN) 175, and/or a network slice admission control function (NSACF) 180.

According to an embodiment, in 3GPP systems, conceptual links connecting NFs in the 5G system are defined as reference points. In the following, examples of reference points included in the 5G system architecture described in FIG. 1 are provided below.
- N1: A reference point between a UE and an AMF
- N2: A reference point between an (R)AN and an AMF
- N3: A reference point between an (R)AN and a UPF
- N4: A reference point between an SMF and a UPF
- N5: A reference point between a PCF and an AF
- N6: A reference point between a UPF and a DN
- N7: A reference point between an SMF and a PCF
- N8: A reference point between a UDM and an AMF
- N9: A reference point between two core UPFs
- N10: A reference point between a UDM and an SMF
- N11: A reference point between an AMF and an SMF
- N12: A reference point between an AMF and an AUSF
- N13: A reference point between a UDM and an authentication server function (AUSF)
- N14: A reference point between two AMFs
- N15: A reference point between a PCF and an AMF for a non-roaming scenario, and a reference point between a PCF and an AMF in a visited network for a roaming scenario

In the 5G system, network slicing refers to a structure and a technology enabling multiple independent logical networks virtualized in a single physical network. In order to satisfy specialized requirements of a service/application, a network operator provides a service by configuring a virtual end-to-end network referred to as a network slice. In this case, the network slice is distinguished by an identifier referred to as single-network slice selection assistance information (S-NSSAI). The network transmits a set of allowed slices (e.g., allowed NSSAI(s)) to a UE during a UE registration procedure, and the UE transmits and receives application data via a protocol data unit (PDU) session generated via one piece of S-NSSAI (i.e., network slice) in the set of allowed slices.

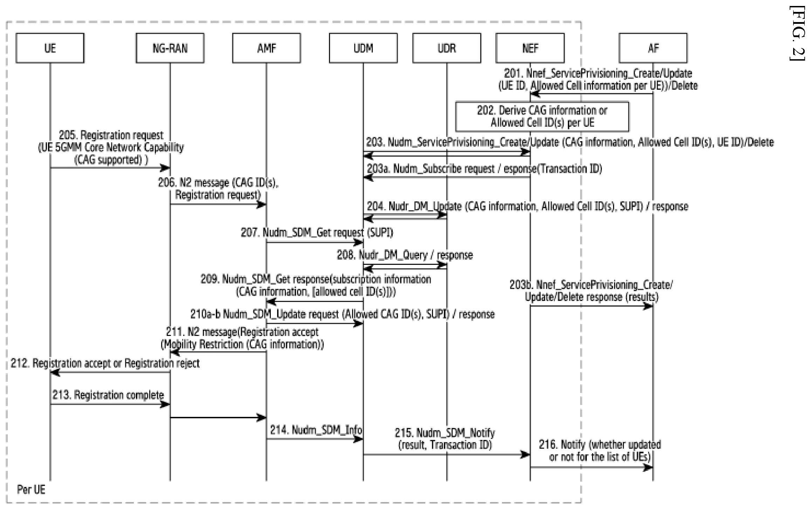

FIG. 2 illustrates a method for providing allowed group information of a UE.

Referring to FIG. 2, in operation 201 according to an embodiment, a management entity of a user-installed base station (e.g., a femto base station) may transmit a request message (e.g., an Nnef_ServiceProvisioning_Create, Update, and/or Delete message) for creating, updating, and/or deleting information on UE(s) which is allowed to access the user-installed base station (e.g., the femto base station), to a 5G core network (5GC) via an AF. (Nnef_ServicePrivisioning_Create/Update (UE ID, allowed cell information per UE)/Delete)

The term "user-installed base station" used in the disclosure is only an example, and the term "user-installed base station" may be replaced by a term such as a base station, a user-installable base station, a small cell, a small base station, or a femto cell.

According to an embodiment, in case that the AF directly transmits a message to a UDM, the AF may directly transmit a message (e.g., a Nudm_ServiceProvisioning_Create, Update, or Delete message) of operation 203 to the UDM without going through an NEF. For example, a message that the AF transmits to a network exposure function (NEF) (or a message transmitted to the UDM) may include at least some of the following pieces of information:
- AF ID
- Application Service Provider (ASP) ID
- UE ID: A generic public subscription identifier (GPSI) or a subscription permanent identifier (SUPI) may be included. Alternatively, an external group ID indicating multiple UEs may be included.
- Allowed cell information per UE: Information enabling identification of allowed base station(s) per UE may be included. For example, allowed cell information per UE may include cell ID(s) and/or TA ID(s), closed access group (CAG) ID(s), cell group ID(s) (i.e., an identifier for one or more cells or base station groups), and/or geographic location information enabling identification of a base station. The base station identification information may be provided together with a public land mobile network (PLMN) ID. In this case, a separate identifier (e.g., AF-Service-Identifier, App ID, AF ID, or external CAG ID) corresponding to a CAG ID may be provided. In this case, the NEF may convert the separate identifier to a CAG ID and use the CAG ID. In addition, a separate identifier (e.g., an external cell ID) corresponding to a cell ID may be provided. In this case, the NEF may convert the separate identifier to a cell ID and use the cell ID.

In addition, a separate identifier (e.g., an AF-Service-Identifier, an app ID, an AF ID, or an external cell group ID) corresponding to a cell group ID may be provided. If provided, the NEF may convert the separate identifier to a cell group ID and use the cell group ID.
- indication per UE: If the UE is allowed to access only provided cell ID(s), an indicator indicating an accessible cell ID may be included.

According to an embodiment, in operation 202, when receiving the message from the AF in operation 201, the NEF may perform authorization for the AF''s request, and may transmit a response message including information indicating failure or rejection to the AF when the authorization fails. (Derive CAG information or allowed cell ID(s) per UE).

According to an embodiment, if the authorization for the AF's request is successful, the NEF may derive or identify CAG information per UE, based on information included in the message received in operation 201. The CAG information may include an allowed CAG list (e.g., a list including allowed CAG IDs, and may exist per PLMN for one or more PLMNs), a CAG cell only indication (e.g., meaning a UE that is allowed to access only a CAG cell), and/or validity information (e.g., validity period information of the allowed CAG list).

According to an embodiment, when the information regarding the allowed base station(s) received in operation 201 includes a CAG ID(s), the NEF may derive or identify an allowed CAG list based on the CAG ID(s).

According to an embodiment, when the information regarding the allowed base station(s) (e.g., allowed cell information per UE) received in operation 201 includes cell ID(s), the NEF may derive or identify an allowed CAG list (e.g., allowed CAG list) for the UE, based on the CAG ID(s) information supported per cell (e.g., supported CAG ID(s) per cell) stored in configuration information.

According to an embodiment, when the information (e.g., allowed cell information per UE) on the allowed base station(s) received in operation 201 includes cell group ID(s), the NEF may derive an allowed CAG list for the UE, based on internal cell ID(s) information per cell group ID and/or CAG ID(s) information supported per cell, stored in the configuration information.

According to an embodiment, when the information regarding the allowed base station(s) (e.g., allowed cell information per UE) received in operation 201 includes geographical information (e.g., area information), the NEF may derive an allowed CAG list for the UE, based on internal cell ID(s) information per area information (s) and and/or CAG ID(s) information supported per cell, stored in the configuration information.

If the information regarding the allowed base stations includes cell ID(s), cell group ID(s), or area information, but does not store CAG IDs supported per cell ID, the NEF may derive or identify allowed cell ID(s) per UE with respect to corresponding cell ID(s).

According to an embodiment, when the message received in operation 201 includes a UE identifier (e.g., a generic public subscription identifier (GPSI)) other than an SUPI, the NEF may transmit an authentication request including the GPSI to the UDM, and when the authentication is successful, the UDM may transmit an SUPI corresponding to the GPSI to the NEF (not shown).

According to an embodiment, in operation 203, the NEF may transmit a message including CAG information, allowed cell ID(s), and/or a UE ID (e.g., an SUPI) to the UDM, based on the information converted in operation 201. (Nudm_ServicePrivisioning_Create/Update (CAG information, allowed cell ID(s), UE ID)/Delete)

According to an embodiment, when the message received in operation 203 includes a UE identifier (e.g., a generic public subscription identifier (GPSI)) other than an SUPI, the UDM may identify an SUPI associated with the UE, based on stored information. When an external group ID is included in the message received in operation 202, the UDM may identify a corresponding internal group ID, based on the stored information (not illustrated).

According to an embodiment, in operation 203a, the NEF may transmit a subscription request message for receiving a notification regarding the processing result of the message transmitted in operation 203 (e.g., whether the CAG information provided in operation 203 has been transferred for each UE) (Nudm_Subscribe request / response (transaction ID)).

According to an embodiment, in operation 204, the UDM may transmit, to a UDR, a message for updating CAG information and/or allowed cell ID(s) regarding the UE. The UDR may transmit a response message in response to the update request message. (Nudr_DM_Update (CAG information, allowed cell ID(s), SUPI) / response)

According to an embodiment, the UDR may transmit a notification message to the UDM when the update is completed.

According to an embodiment, the UDM may transmit the notification message to an AMF. Upon receiving the notification message, the AMF may include the CAG information updated through the UE configuration update procedure in a UE configuration update command when the UE is in a connected state (e.g., connected state), and transmit the command to the UE through the next generation radio access network (NG-RAN). The AMF may include all or part of the CAG information in an N2 message transmitted to the NG-RAN and transmit the same. When the UE receives a message including CAG information from the AMF, the UE may transmit, to the AMF, a notification message indicating that the message has been properly received. For example, when the UE successfully receives a message including CAG information from the AMF, the UE may transmit, to the AMF, a message indicating that the message has been successfully received. The subsequent procedure is the same as in operations 214 to 216.

According to an embodiment, when the UE is in an IDLE state (i.e., a state in which a connection with the AMF is not activated), the AMF may determine to update the UE when the UE transmits a registration request message. In operation 205, the UE may transmit the registration request message to the NG-RAN. The message may include information (e.g., CAG supported) indicating that the UE supports a CAG. (Registration request (UE 5GMM(5G mobile management) Core Network Capability (CAG supported))

According to an embodiment, in operation 206, when the UE has accessed a CAG cell, the NG-RAN may include a registration request together with CAG ID(s) supported by the CAG cell in an N2 message transmitted to the AMF. (N2 message (CAG ID(s), Registration request))

According to an embodiment, in operation 207, the AMF may transmit a message for requesting UE subscription information to the UDM. (Nudm_SDM_Get request (SUPI))

According to an embodiment, in operation 208, the UDM may obtain the UE subscription information from the UDR. (Nudr_DM_Query/response)

According to an embodiment, in operation 209, the AMF may receive CAG information and/or allowed cell ID(s) from the UE subscriber information received from the UDM. (Nudm_SDM_Get response (subscription information (CAG information, [allowed cell ID(s)]))).

According to an embodiment, in operations 210a and 210b, when the cell ID included in the message received in operation 206 is included in the allowed cell ID(s) included in the message received from the UDM in operation 209, the AMF may transmit, to the UDM, a message for updating to the UE's allowed CAG ID(s) with CAG identifier (ID)(s) (e.g., CAG ID(s) supported by the cell to which the UE has accessed) included in the message received in operation 206. When receiving the message, the UDM may store the message (or information included in the message) in the UDR. The UDR may transmit a notification message including the updated CAG information to the UDM, and the UDM may transmit the notification message including the updated CAG information to the AMF. (Nudm_SDM_Update request (allowed CAG ID(s), SUPI) / response)

According to an embodiment, in operation 211, the AMF may transmit the N2 message to the NG-RAN. The message to be transmitted may include an N2 message including all or part of information included in the CAG information and/or a registration accept message including the CAG information. (N2 message(Registration accept (Mobility Restriction (CAG information)))

According to an embodiment, in operation 212, the UE may receive a registration accept message or a reject message. For example, the transmitted message (e.g., a registration acceptance message, a rejection message) may include CAG information. (Registration accept or Registration reject)

According to an embodiment, in operation 213, when CAG information is included in the registration accept or reject message, the UE may delete the existing stored CAG information and store the received CAG information. (Registration complete)

The UE may transmit, to the AMF through the NG-RAN, a notification indicating that the CAG information has been received.

According to an embodiment, in operation 214, when the notification indicating that the CAG information has been received is received from the UDM, the AMF may transmit, to the UDM, the notification indicating that the CAG information has been received. (Nudm_SDM_Info)

According to an embodiment, in operation 215, the UDM may transmit, to the NEF, a notification indicating that the UE has received the allowed cell information. (Nudm_SDM_Notify (result, Transaction ID))

According to an embodiment, in operation 216, the NEF may transmit, to the AF, a notification indicating that the UE has received the allowed cell information with respect to one or more UEs. (Notify (whether updated or not for the list of UEs))

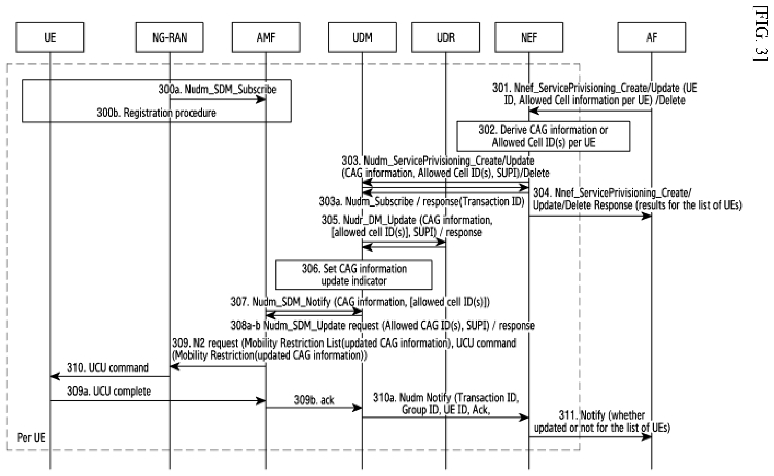

FIG. 3 is a diagram illustrating a method for providing group information of UEs according to an embodiment.

Referring to FIG. 3, in operation 300a according to an embodiment, an AMF may obtain subscription information of a UE from a UDM. (Nudm_SDM_Subscribe)

According to an embodiment, in operation 300b, the AMF may perform a registration procedure. (Registration procedure)

According to an embodiment, in operation 301, a management entity of a user-installed base station (e.g., a femto base station) may transmit a request message (e.g., a Nnef_ServiceProvisioning_Create, Update, and/or Delete message) for creating, updating, and/or deleting information on UE(s) which are allowed to access the user-installed base station (e.g., the femto base station) to a 5G core network (5GC) via an AF. (Nnef_ServicePrivisioning_Create/Update (UE ID, allowed cell information per UE) /Delete)

According to an embodiment, in operation 302, when information on allowed base station(s) includes CAG ID(s), an NEF may derive or identify an allowed CAG list, based on the CAG ID(s) (Derive CAG information or allowed cell ID(s) per UE).

According to an embodiment, in operation 303, the NEF may transmit, based on converted information, a message including CAG information, allowed cell ID(s), and/or UE ID to the UDM. (Nudm_ServicePrivisioning_Create/Update (CAG information, allowed cell ID(s), SUPI)/Delete))

According to an embodiment, in operation 303a, in order to authenticate a subscriber information change with regard to UEs (e.g., SUPI(s)) in response to the request of operation 202, the UDM may transmit, to a UDR, a request message for obtaining subscriber information for the SUPI(s), and may obtain the subscriber information for the SUPI(s) from the UDR. (Nudm_Subscribe / response(Transaction ID))

According to an embodiment, in operation 304, the NFE may transmit, to the AF, a response (e.g., a result regarding the list of UEs) to the request message (e.g., the Nnef_ServiceProvisioning_Create, Update, and/or Delete message) for creating, updating, and/or deleting the information. (Nnef_ServicePrivisioning_Create/Update/Delete Response (results for the list of UEs))

According to an embodiment, in operation 305, the UDM may transmit a message for updating the CAG information and/or the allowed cell ID(s) for the UE to the UDR. The UDR may transmit a response message in response to the update request message. (Nudr_DM_Update (CAG information, [allowed cell ID(s)], SUPI) / response)

According to an embodiment, in operation 306, the UDM may configure a CAG information update indicator. (Set CAG information update indicator)

According to an embodiment, in operation 307, the UDM may transmit information on the CAG information and/or the allowed cell IDs to the AMF.

### (Nudm_SDM_Notify (CAG information, [allowed cell ID(s)]))

According to an embodiment, in operation 308a-b, the AMF may transmit, to the UDM, a message for updating the UE's allowed CAG ID(s) with CAG ID(s) (e.g., CAG ID(s) supported by a cell which the UE has accessed) included in the received message. (Nudm_SDM_Update request (Allowed CAG ID(s), SUPI) / response)

According to an embodiment, in operation 309, the UDM may transmit an N2 request message to an NG-RAN. For example, the N2 request message may include a mobile restriction list (e.g., updated CAG information), and/or a UCU command (e.g., a mobility restriction (updated CAG information)). (N2 request (Mobility Restriction List (updated CAG information), UCU command (Mobility Restriction (updated CAG information)))

According to an embodiment, in operation 310, the NG-RAN may transfer the UCU command to the UE. (UE configuration update (UCU) command)

According to an embodiment, in operation 309a, the UE may transmit, to the AMF, a message (or a completion message) indicating that the UCU has been completed. (UCU complete)

According to an embodiment, in operation 309b, the AMF may transmit an ACK to the UDM. (ack) For example, the AMF may transmit an ACK indicating that the UCU has been completed to the UDM.

According to an embodiment, in operation 310a, the UDM may transfer a notification including a transaction ID, a group ID, a UE ID, and an ACK to the NEF. (Nudm Notify (Transaction ID, Group ID, UE ID, Ack))

According to an embodiment, in operation 311, the NEF may transmit, to the AF, a notification indicating that the UE has received the allowed cell information with respect to one or more UEs (Notify (whether updated or not for the list of UEs)).

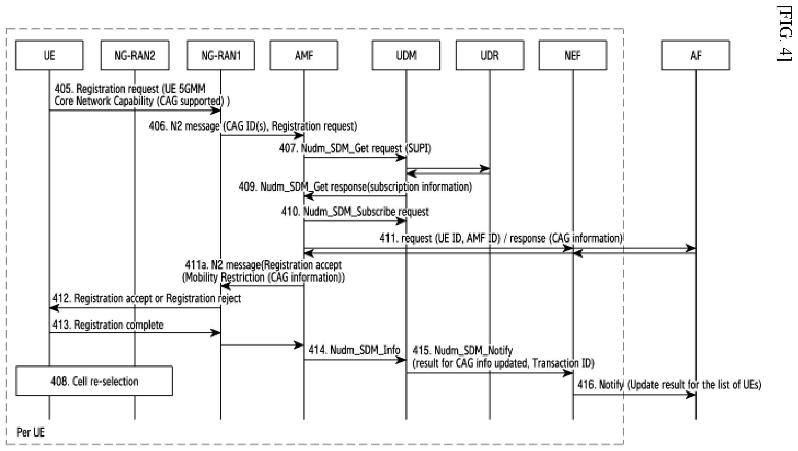

FIG. 4 is a diagram illustrating a method for providing group information of UEs during registration of an agreed visited (V)-PLNM.

Referring to FIG. 4, in operation 405 according to an embodiment, a UE may transmit a registration request to NG-RAN 1. For example, a message for the registration request may include information (e.g., information indicating that a CAG is supported) about the UE 5G mobility management (5GMM) core network capability. (Registration request (UE 5GMM Core Network Capability (CAG supported)))

According to an embodiment, in operation 406, NG-RAN 1 may transmit an N2 message to an AMF. For example, the N2 message may include CAG ID(s) and/or the registration request. (N2 message (CAG ID(s), Registration request))

According to an embodiment, in operation 407, the AMF may transmit a message for requesting UE subscription information to a UDM. (Nudm_SDM_Get request (SUPI))

According to an embodiment, in operation 408, the UE may perform a cell reselection. (Cell re-selection)

According to an embodiment, in operation 409, the UDM may obtain the UE subscription information from a UDR. (Nudm_SDM_Get response (subscription information))

According to an embodiment, in operation 410, the AMF may transmit a request message for obtaining UE subscriber information to the UDM.

### (Nudm_SDM_Subscribe request)

According to an embodiment, in operation 411, information may be exchanged between the AMF and an AF. For example, a request including a UE ID and/or an AMF ID (or a cell ID or an external cell group ID or CAG ID(s)) may be transferred from the AMF to the AF via the NEF. The AF determines, based on the received message, whether the UE is allowed for the corresponding CAG ID (or cell ID or external cell group ID). If allowed, a response including the CAG information may be transferred from the AF to the AMF via the NEF. (Request (UE ID, AMF ID) / response (CAG information))

According to an embodiment, in operation 411a, the AMF may transmit an N2 message to NG-RAN 1. For example, the N2 message may include a registration acceptance message and/or mobility restriction (e.g., CAG information). (N2 message (Registration accept (Mobility Restriction (CAG information)))

According to an embodiment, in operation 412, NG-RAN 1 may transmit a registration request or registration rejection message to the UE. (Registration accept or Registration reject)

According to an embodiment, in operation 413, the UE may transmit a registration completion message to NG-RAN 1. (Registration complete)

According to an embodiment, in operation 414, the AMF may transmit subscriber information to the UDM. (Nudm_SDM_Info)

According to an embodiment, in operation 415, the UDM may notify the NEF of the result of the CAG information update and/or a transaction ID. (Nudm_SDM_Notify (result for CAG info updated, Transaction ID))

According to an embodiment, in operation 416, the NEF may update a result for the lists of UEs to the AF. (Notify (Update result for the list of UEs))

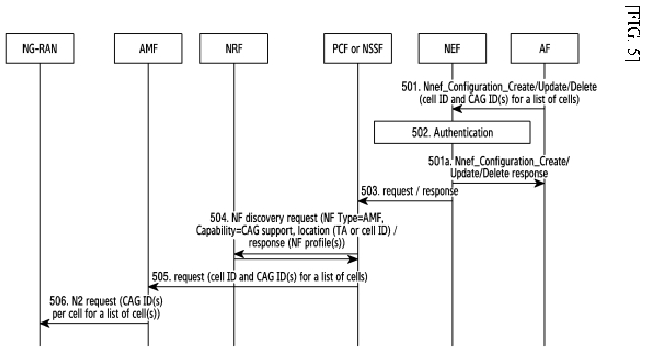

FIG. 5 illustrates a method for controlling configuration of a user-installed base station according to an embodiment.

Referring to FIG. 5, in operation 501 according to an embodiment, an AF may transmit a configuration creation/update/deletion message to an NEF. In case that the AF is a trusted AF, the message may be directly transmitted to a PCF or an NSSF without going through the NEF. For example, the message may include an AF ID, a cell ID(s) and/or a tracking area (TA) ID(s) for one or more cells (i.e., a list of cells), and CAG ID(s) to be configured for the cell ID and/or TA ID(s). The message may include area information (e.g., area information for identifying one or more base stations, geographical location information, group ID, etc.) instead of a cell ID or TA ID.

(Nnef_Configuration_Create/Update/Delete (cell ID and CAG ID(s) for a list of cells))

According to an embodiment, in operation 502, the NEF may perform authentication for the AF's request through configuration information or a UDM (not illustrated). (Authentication)

The NEF may identify whether the AF (i.e., the AF ID) is an AF ID which is allowed to configure the cell ID(s) and/or the tracking area (TA) ID(s) included in the message or cell ID(s) and/or tracking area (TA) ID(s) corresponding to the area information, and may perform operation 503 only when the configuration is allowed. According to an embodiment, in operation 501a, the NEF may transmit a response message to the AF in response to the configuration creation/update/deletion message. When the authentication is successful in operation 502, information indicating the success may be included in the response message. When the authentication fails in operation 502, information indicating the failure may be included in the response message. According to an embodiment, in operation 503, the NEF may transmit a request and/or a response to the PCF or the NSSF. (Request / response)

A message that the NEF requests from the PCF or the NSSF may include information included in the message received from the AF. When the message received from the PCF or the NSSF includes area information, the NEF may convert the same to a TA ID and/or a cell ID.

According to an embodiment, in operation 504, the PCF or the NSSF may transmit an NF discovery request to an NRF, and the NF discovery request may include an NF type (e.g., AMF), capability information (e.g., CAG supported), and/or a location (e.g., a TA or a cell ID). The NRF may transmit a response message including an NF profile to the PCF or the NSSF (NF discovery request (NF Type=AMF, Capability=CAG support, location (list of TA(s) and/or cell ID(s)) / response (NF profile(s))).

The NRF may include NF profile(s) of NF instance(s) that satisfy information included in the NF discovery request message. For example, when the NF type is an AMF, the NF profile(s) may include the address of an NF, CAG ID(s) supported by the NF, cell ID(s) supported by the NF, and/or TA ID(s) supported by the NF. The PCF or the NSSF may select an AMF, based on the NF profile(s) included in the message received from the NRF, and may transmit a message of operation 505 to the selected AMF. When there is one or more AMFs responsible for the cell ID(s) and/or TA ID(s) included in the message received in operation 503 (or cell ID(s) and/or TA ID(s) corresponding to the area information included in the message received in operation 503), the message of operation 505 may be transmitted to each AMF. According to an embodiment, in operation 505, the PCF or the NSSF may transmit, to the AMF, a request message including cell IDs and/or tracking area (TA) IDs for one or more cells (i.e., a list of cells) for which the AMF is responsible and CAG IDs to be configured for the cell ID(s) and/or TA ID(s). (Request (cell ID and CAG ID(s) for a list of cells))

According to an embodiment, in operation 505, the PCF or the NSSF may transmit a request message including an indicator for requesting the AMF to inform of the cell ID(s) and/or tracking area (TA) ID(s) for the one or more cells (i.e., a list of cells) for which the AMF is responsible, and CAG ID(s) supported for the cell IDs and the cells.

According to an embodiment, when the message received from the PCF or the NSSF in operation 505 does not include CAG ID(s), the AMF may include information on the CAG ID(s) supported by the cell(s) corresponding to the message received in operation 505 in a response message to be transmitted to the PCF or the NSSF in operation 506. In this case, the PCF or the NSSF may include, in a message to be transmitted to the AF via the NEF, information on supported CAG ID(s) per area (e.g., per area information, TA ID(s), and/or cell ID(s)) and transmit the message.

According to an embodiment, when the message received in operation 505 includes CAG ID(s), the AMF may transmit an N2 request to an NG-RAN in operation 506, and the N2 request may include cell ID(s) and/or tracking area (TA) ID(s) for one or more cells (i.e., a list of cells) and CAG ID(s) to be configured for the cell ID(s) and/or TA ID(s). (N2 request (CAG ID(s) per cell for a list of cell(s)))

When the N2 request message is received from the AMF in operation 506, the NG-RAN configures cell(s) corresponding to the TA ID(s) and/or the cell ID(s) included in the N2 request message as CAD ID(s) for supporting the CAG ID(s) included in the N2 request message.

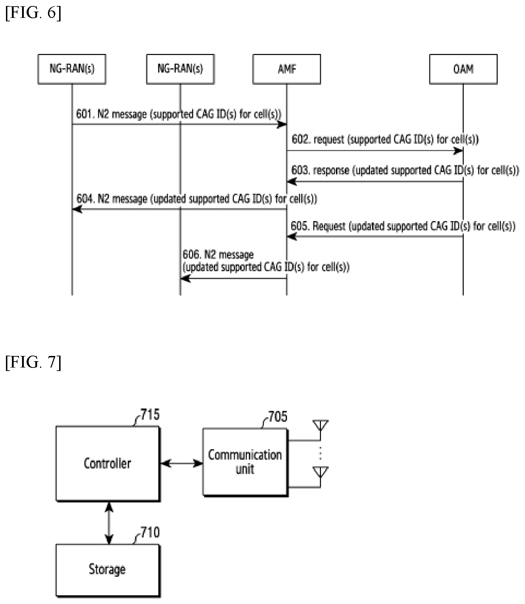

FIG. 6 illustrates a method for controlling configuration of a user-installed base station according to an embodiment.

Referring to FIG. 6, in operation 601, NG-RAN 1 may transmit an N2 message to an AMF. For example, the N2 message may include information on CAG ID(s) supported by a CAG cell. (N2 message (supported CAG ID(s) for cells))

According to an embodiment, in operation 602, the AMF may transmit a request message including the information on the CAG ID(s) supported by the CAG cell to an OAM (Operations, Administration, and Maintenance). (Request (supported CAG ID(s) for cell(s))

According to an embodiment, in operation 603, the OAM may transmit, to the AMF, a response including information on an update of the CAG ID(s) supported by the CAG cell. (Response (updated supported CAG ID(s) for cell(s))

According to an embodiment, in operation 604, the AMF may transmit an N2 message to the NG-RAN 1. For example, the N2 message may include information on an updated CAG ID(s). (N2 message (updated supported CAG ID(s) for cell(s))

According to an embodiment, in operation 605, the OAM may transmit a request message including the information on the updated CAG ID(s) to the AMF. (Request (updated supported CAG ID(s) for cell(s))

According to an embodiment, in operation 606, the AMF may transmit an N2 message including the information on the updated CAG ID(s) to NG-RAN 2. (N2 message (updated supported CAG ID(s) for cell(s))

FIG. 7 illustrates an exemplary structure of a base station according to an embodiment of the disclosure.

Referring to FIG. 7, the structure according to an embodiment illustrated in FIG. 7 may be understood as a structure of the gNB and/or eNB in FIG. 1. As used herein, such terms as "... unit" and "-er" refer to a unit configured to process at least one function or operation, and may be implemented as hardware, software, or a combination of hardware and software.

According to an embodiment, the base station may include a communication unit 705, a storage 710, and/or a controller 715.

The communication unit 705 performs functions for transmitting/receiving signals through a radio channel. For example, the communication unit 705 performs functions of conversion between baseband signals and bitstrings according to the physical layer specifications of the system. For example, during data transmission, the communication unit 705 encodes and modulates a transmitted bitstring to generate complex symbols. In addition, during data reception, the communication unit 705 demodulates and decodes a baseband signal to restore a received bitstring. In addition, the communication unit 705 up-converts a baseband signal to an RF band signal, transmits the same through an antenna, and down-converts an RF band signal received through the antenna to a baseband signal. For example, the communication unit 705 may include a transmission filter, a reception filter, an amplifier, a mixer, an oscillator, a DAC, and an ADC.

In addition, the communication unit 705 may include multiple transmission/reception paths. Moreover, the communication unit 705 may include at least one antenna array including multiple antenna elements. In terms of hardware, the communication unit 705 may include a digital circuit and an analog circuit (e.g., a radio frequency integrated circuit (RFIC)). The digital circuit and the analog circuit may be implemented as a single package. In addition, the communication unit 705 may include multiple RF chains. Furthermore, the communication unit 705 may perform beamforming.

The communication unit 705 transmits and receives signals as described above. Accordingly, all or part of the communication unit 705 may be referred to as a "transmitter", a "receiver", or a "transceiver". In addition, as used in the following description, the meaning of "transmission and reception performed through a radio channel" includes the meaning that the above-described processing is performed by the communication unit 705.

The storage 710 may store basic programs, application programs, and data, such as configuration information, for operation of the main base station. The storage 710 may include a volatile memory, a nonvolatile memory, or a combination of a volatile memory and a nonvolatile memory. In addition, the storage 710 provides the stored data at the request of the controller 715.

The controller 715 controls the overall operation of the base station. For example, the controller 715 transmits and receives signals through the communication unit 705. In addition, the controller 715 records data in the storage 710 and reads the data from the storage 710. In addition, the controller 715 may perform functions of protocol stacks required by communication specifications. To this end, the controller 715 may include at least one processor or microprocessor, or may be a part of a processor. In addition, a part of the communication unit 705 and the controller 715 may be referred to as a communication processor (CP). According to various embodiments, the controller 715 may control to perform synchronization by using a wireless communication network. For example, the controller 715 may control the base station to perform operations according to various embodiments described above.

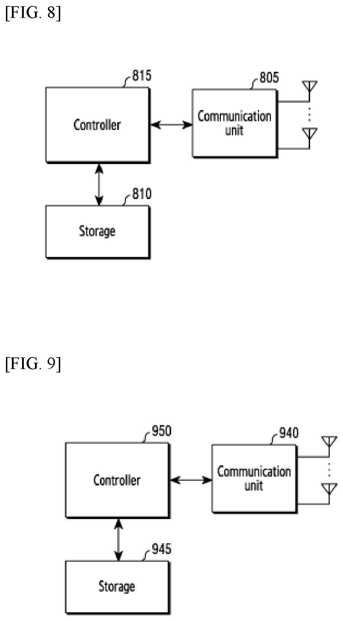

FIG. 8 illustrates an exemplary structure of a UE according to an embodiment of the disclosure. The structure illustrated in FIG. 8 may be understood as a structure of the UE (or NR UE) in FIG. 1. As used herein, such terms as "... unit" and "-er" refer to a unit configured to process at least one function or operation, and may be implemented as hardware, software, or a combination of hardware and software.

Referring to FIG. 8, the UE may include a communication unit 805, a storage 810, and/or a controller 815.

The communication unit 805 performs functions for transmitting/receiving signals through a radio channel. For example, the communication unit 805 performs functions of conversion between baseband signals and bitstrings according to the physical layer specifications of the system. For example, during data transmission, the communication unit 805 encodes and modulates a transmitted bitstring to generate complex symbols. In addition, during data reception, the communication unit 805 demodulates and decodes a baseband signal to restore a received bitstring. In addition, the communication unit 805 up-converts a baseband signal to an RF band signal, transmits the same through an antenna, and down-converts an RF band signal received through the antenna to a baseband signal. For example, the communication unit 805 may include a transmission filter, a reception filter, an amplifier, a mixer, an oscillator, a DAC, and an ADC.

In addition, the communication unit 805 may include multiple transmission/reception paths. Moreover, the communication unit 805 may include at least one antenna array including multiple antenna elements. In terms of hardware, the communication unit 805 may include a digital circuit and an analog circuit (e.g., a radio frequency integrated circuit (RFIC)). The digital circuit and the analog circuit may be implemented as a single package. In addition, the communication unit 805 may include multiple RF chains. Furthermore, the communication unit 805 may perform beamforming.

The communication unit 805 transmits and receives signals as described above. Accordingly, all or part of the communication unit 805 may be referred to as a "transmitter", a "receiver", or a "transceiver". In addition, as used in the following description, the meaning of "transmission and reception performed through a radio channel" includes the meaning that the above-described processing is performed by the communication unit 805.

The storage 810 stores basic programs, application programs, and data, such as configuration information, for operation of the main base station. The storage 810 may include a volatile memory, a nonvolatile memory, or a combination of a volatile memory and a nonvolatile memory. In addition, the storage 810 provides the stored data at the request of the controller 815.

The controller 815 controls the overall operation of the UE. For example, the controller 815 transmits and receives signals through the communication unit 805. In addition, the controller 815 records data in the storage 810 and reads the data from the storage 810. In addition, the controller 815 may perform functions of protocol stacks required by communication specifications. To this end, the controller 815 may include at least one processor or microprocessor, or may be a part of a processor. In addition, a part of the communication unit 805 and the controller 815 may be referred to as a communication processor (CP). According to various embodiments, the controller 815 may control to perform synchronization by using a wireless communication network. For example, the controller 815 may control the UE to perform operations according to various embodiments as described below.

FIG. 9 illustrates a structure of a core network entity according to an embodiment of the disclosure. A structure of a core network entity in a wireless communication system according to various embodiments of the disclosure is illustrated. The structure illustrated in FIG. 9 may be understood as corresponding to at least one of the network entities in FIGS. 1 to 8. As used herein, such terms as "... unit" and "-er" refer to a unit configured to process at least one function or operation, and may be implemented as hardware, software, or a combination of hardware and software.

Referring to FIG. 9, the core network entity may include a communication unit 940, a storage 945, and a controller 950.

The communication unit 940 provides an interface for communicating with other devices in the network. That is, the communication unit 940 converts a bitstring, transmitted from the core network entity to any other device, into a physical signal, and converts a physical signal, received from any other device, into a bitstring. The communication unit 940 may transmit/receive signals. Accordingly, the communication unit 940 may be referred to as a modem, a transmitter, a receiver, or a transceiver. The communication unit 940 enables the core network entity to communicate with other devices or the system via a backhaul connection (e.g., wired backhaul or wireless backhaul) or via a network.

The storage 945 may store basic programs, application programs, and data, such as configuration information, for operation of the main base station. The storage 945 may include a volatile memory, a nonvolatile memory, or a combination of a volatile memory and a nonvolatile memory. In addition, the storage 945 provides the stored data at the request of the controller 950.

The controller 950 controls the overall operation of the core network entity. For example, the controller 950 transmits/receives signals through the communication unit 940. In addition, the controller 950 records data in the storage 945 and reads the data from the storage 945. To this end, the controller 950 may include at least one processor. According to various embodiments, the controller 950 may control to perform synchronization by using a wireless communication network. For example, the controller 950 may control the core network entity to perform operations according to various embodiments as described below.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a unified data management (UDM) entity in a wireless communication system, the method comprising:
receiving, from a network exposure function (NEF) entity, an update request message comprising provisioning information associated with closed access group (CAG) information;
transmitting, to a unified data repository (UDR) entity, the provisioning information for update of the provisioning information; and
transmitting, to the NEF entity, a response message for the update,
wherein the CAG information comprises a list of CAG identity (ID) which a user equipment (UE) is allowed to access, and
wherein the provisioning information comprises information on at least one CAG ID to be included in the list of the CAG ID.

2. The method of claim 1, wherein the provisioning information further comprises information on an ID of the UE, and
wherein the ID of the UE comprises a generic public subscription identifier (GPSI).

3. The method of claim 2, further comprising:
identifying a subscription permanent identifier (SUPI) based on the GPSI.

4. The method of claim 1, wherein the CAG information comprising the list of the CAG ID is updated, and
wherein the updated CAG information is valid for a time specified based on time validation information.

5. A method performed by a network exposure function (NEF) entity in a wireless communication system, the method comprising:
receiving, from an application function (AF) entity, provisioning information associated with closed access group (CAG) information;
transmitting, to a unified data management (UDM) entity, an update request message comprising the provisioning information; and
receiving, from the UDM entity, a response message for update of the provisioning information,
wherein the CAG information comprises a list of CAG identity (ID) which a user equipment (UE) is allowed to access, and
wherein the provisioning information comprises information on at least one CAG ID to be included in the list of the CAG IDs.

6. The method of claim 5, wherein the provisioning information further comprises information on an ID of the UE, and
wherein the ID of the UE comprises a generic public subscription identifier (GPSI).

7. The method of claim 6, wherein a subscription permanent identifier (SUPI) for the update is based on the GPSI.

8. The method of claim 5, wherein the CAG information comprising the list of the CAG IDs is updated, and
wherein the updated CAG information is valid for a time specified based on time validation information.

9. A unified data management (UDM) entity in a wireless communication system, the UDM entity comprising:
a transceiver; and
a controller coupled to the transceiver,
wherein the controller is configured to:
receive, from a network exposure function (NEF) entity, an update request message comprising provisioning information associated with closed access group (CAG) information;
transmit, to a unified data repository (UDR) entity, the provisioning information for update of the provisioning information; and
transmit, to the NEF entity, a response message for the update, wherein the CAG information comprises a list of CAG identity (ID) which a user equipment (UE) is allowed to access, and
wherein the provisioning information comprises information on at least one CAG ID to be included in the list of the CAG ID.

10. The UDM entity of claim 9, wherein the provisioning information further comprises information on an ID of the UE, and
wherein the ID of the UE comprises a generic public subscription identifier (GPSI).

11. The UDM entity of claim 10, wherein the controller is further configured to:
identify a subscription permanent identifier (SUPI), based on the GPSI.

12. The UDM entity of claim 9, wherein the CAG information comprising the list of the CAG ID is updated, and
wherein the updated CAG information is valid for a time specified based on time validation information.

13. A network exposure function (NEF) entity in a wireless communication system, the NEF entity comprising:
a transceiver; and
a controller coupled to the transceiver,
wherein the controller is configured to:
receive, from an application function (AF) entity, provisioning information associated with closed access group (CAG) information;
transmit, to a unified data management (UDM) entity, an update request message comprising the provisioning information; and
receive, from the UDM entity, a response message for update of the provisioning information,
wherein the CAG information comprises a list of CAG identity (ID) which a user equipment (UE) is allowed access, and
wherein the provisioning information comprises information on at least one CAG ID to be included in the list of the CAG IDs.

14. The NEF entity of claim 13, wherein the provisioning information further comprises information on an ID of the UE, and
wherein the ID of the UE comprises a generic public subscription identifier (GPSI).

15. The NEF entity of claim 14, wherein a subscription permanent identifier (SUPI) for the update is based on the GPSI,
wherein the CAG information comprising the list of the CAG IDs is updated, and
wherein the updated CAG information is valid for a time specified based on time validation information.
